# EUROPEAN PATENT SPECIFICATION

(11) **EP 2 420 663 B1**
(45) Date of publication and mention of the grant of the patent: **07.05.2014**
(21) Application number: 10764482.5
(22) Date of filing: 14.04.2010
(51) Int. Cl.: F02D 41/06, F02D 9/02, F02D 17/00, F02D 29/02, B60W 10/06, B60W 30/18, F02N 11/08, F02N 99/00, F02D 17/04, F02D 41/00

(54) **AUTOMATIC STOP/START CONTROL DEVICE FOR INTERNAL COMBUSTION ENGINE**
AUTOMATISCHE START/STOPP-STEUERVORRICHTUNG FÜR EINEN VERBRENNUNGSMOTOR
DISPOSITIF DE COMMANDE DE DÉMARRAGE/ARRÊT AUTOMATIQUE POUR MOTEUR À COMBUSTION INTERNE

(30) Priority: 15.04.2009 JP 2009098906
(43) Date of publication of application: 22.02.2012
(73) Proprietor: TOYOTA JIDOSHA KABUSHIKI KAISHA, Toyota-shi, Aichi-ken, 471-8571 (JP)
(72) Inventor: YOSHIHARA, Masatomo, Toyota-shi, Aichi-ken 471-8571 (JP); OKAMURA, Koji, Toyota-shi, Aichi-ken 471-8571 (JP); MASUDA, Satoshi, Kariya-shi, Aichi-ken 448-8661 (JP)
(74) Representative: Kuhnen & Wacker
(86) International application number: PCT/JP2010/056686
(87) International publication number: WO 2010/119898

(56) References cited:
- EP-A1- 1 039 124
- EP-A2- 1 406 010
- JP-A- 2001 020 787
- JP-A- 2006 104 955
- JP-A- 2006 104 955
- JP-A- 2008 267 297
- JP-A- 2008 267 297

## Description

### Technical Field

The present invention relates to an automatic stop and start control apparatus of an internal combustion engine which is provided with a function of restarting an internal combustion engine (engine) immediately when a restarting demand has been generated during dropping of a rotation speed of the internal combustion engine due to fuel injection stop performed by automatic stop control (idling stop control).

### Background Art

In recent years, vehicles equipped with an automatic stop and start control system of an engine (so-called "idling stop control system") have increased in order to achieve fuel consumption saving, emission reduction, or the like. A conventional ordinary idling stop control system is configured such that, when a driver has stopped a vehicle, an engine is automatically stopped by performing stop of fuel injection (fuel cutoff), and thereafter when the driver has conducted an operation for starting the vehicle (a brake releasing operation, an accelerator pedal stepping operation, or the like), cranking of the engine is performed to restart the engine by automatically feeding power to a starter or a motor which also serves a starter. In hybrid type electric vehicles, since there are ones of a type configured such that an engine is restarted by using a motor for vehicle driving as a starter, "a starter or a motor which also serves as a starter" is simply described as "a starter", so that the explanation is simplified.

In such an idling stop control system, a restart demand may be generated during dropping of a rotation speed of an engine due to fuel cutoff immediately after an automatic stop demand generation, but in such a case, when cranking of the engine is performed to restart the engine by feeding power to the starter after complete stop of engine rotation, it takes time before restart completion from the automatic stop demand generation, which causes the driver to feel delay (dullness) of restart.

As described in Patent Document 1 (JPA-2005-146875), therefore, in an idling stop control system equipped with a starter of a permanently engaged type where a pinion of the starter always meshes with a ring gear of an engine side during engine operation (also called "permanently engaged starter"), there is one of a type where, when a restart demand is generated, in a period of dropping of an engine rotation speed due to fuel cutoff, the engine is restarted by feeding power to the starter before stop of engine rotation.

In this configuration, however, since the number of times of starter start increases inevitably, there is a concern about durability reduction of the starter.

As described in Patent Document 2 (JPA-2008-267297), therefore, there is one of a type where, when a restart demand is generated during dropping of an engine rotation speed due to fuel cutoff caused by idling stop control, if the engine rotation speed still stays in a rotation speed region where starterless starting is possible (restart can be performed by only fuel injection), "starterless starting" which restarts the engine by only fuel injection without using a starter is performed.

### Prior Art Document

### Patent Document

Patent Document 1: JPA-2005-146875
Patent Document 2: JPA-2008-267297

### Summary of the Invention

### Problem to be solved by the Invention

By the way, there is a case where starterless starting is performed in response to a restart demand generated by a brake releasing operation or the like, without a driver stepping an accelerator pedal, during fuel cutoff/engine rotation dropping of idling stop control, and in this case, at the time of restart demand generation, with emphasis on a convergence performance of idling engine rotation after restart completion, a throttle opening degree is controlled by idling rotation speed control (ISC) so as to keep the engine rotation speed at a target idling rotation speed. This limits an intake air amount at the time of restart, which may cause failure in starterless starting due to insufficient combustion torque of the engine.

Therefore, the problem to be solved by the invention is to provide an automatic stop and start control apparatus of an internal combustion engine that can improve restartability when a restart demand is generated during fuel cutoff/dropping of internal combustion engine rotation of idling stop control.

### Means for Solving the Problem

In order to solve the above problem, the present invention includes throttle drive means for adjusting a throttle opening degree of an internal combustion engine; automatic stop control means for stopping fuel injection when an automatic stop demand has been generated during operation of the internal combustion engine; and automatic start control means for performing restart control to restart the internal combustion engine by resuming fuel injection when a restart demand has been generated in the course of rotation speed drop of the internal combustion engine during a fuel injection stop period (during fuel cutoff) after generation of the automatic stop demand, wherein the automatic start control means controls the throttle drive means to make the throttle opening degree during a restart control period after the restart demand generation larger than that at an idling rotation control time. Since this controls the throttle opening degree during a restart control period so as to be larger than the throttle opening degree for idling rotation control when a restart demand has been generated during fuel cutoff/rotation drop of the internal combustion engine of automatic stop control (idling stop control), the combustion torque of the internal combustion engine can be increased by increasing the intake air amount during the restart control period, so that restartability can be improved.

Here, the restart control period is a period from the restart demand generation up to restart completion. The restart control period may be a period until restart completion is actually determined, or may be preset by estimating this period.

The present invention may be configured to set the throttle opening degree during the restart control period according to at least one of an internal combustion engine rotation speed, a cooling water temperature, an intake pipe pressure, and an intake air amount at the time of the restart demand generation. For example, since inertial energy toward rotation drop of the internal combustion engine becomes larger and accordingly a combustion torque required for restart becomes larger as the rotation speed of the internal combustion engine at the time of the restart demand generation decreases, the throttle opening degree may be configured to increase during the restart control period so as to increase the combustion torque of the internal combustion engine as the rotation speed of the internal combustion engine at the time of restart demand generation decreases. Further, since a friction of the internal combustion engine becomes higher and accordingly a combustion torque required for restart becomes higher as the cooling water temperature at the time of the restart demand generation decreases, such a configuration can be adopted that the throttle opening degree during the restart control period is increased to increase the combustion torque of the internal combustion engine as the cooling water temperature at the time of restart demand generation decreases. Further, since the intake pipe pressure or the intake air amount varies according to the rotation speed of the internal combustion engine at the time of the restart demand generation, an effect similar to that obtained by setting the throttle opening degree during the restart control period according to the rotation speed of the internal combustion engine at the time of the restart demand generation can be obtained by setting the throttle opening degree during the restart control period according to the intake pipe pressure or the intake air amount at the time of the restart demand generation.

The present invention may also is configured to set the throttle opening degree during the restart control period according to a dropping rate of rotation of the internal combustion engine (a dropping rate of the rotation speed of the internal combustion engine per predetermined time) during the fuel injection stop period. Since an inertial energy toward rotation drop of the internal combustion engine at the time of the restart demand generation becomes larger and accordingly a combustion torque required for restart becomes larger as the dropping rate of rotation of the internal combustion engine during the fuel injection stop period becomes sharper, even if the rotation speed of the internal combustion engine at the time of the restart demand generation is the same, restartability can be improved by increasing the combustion torque of the internal combustion engine by making the throttle opening degree during the restart control period larger as the dropping rate of rotation of the internal combustion engine during the fuel injection stop period is shaper.

The present invention may be configured to rapidly reduce the throttle opening degree to a target throttle opening degree at an ordinary throttle control time after the restart control period elapses, but may also be configured to perform throttle return control to return to ordinary throttle control by gradually reducing the throttle opening degree after the restart control period elapses, This can reduce the intake air amount gently to reduce rotation fluctuation of the internal combustion engine immediately after the restart completion at a returning time from the restart control to an ordinary throttle control.

In this case, the rate of decrease of the throttle opening degree during a period of the throttle return control may be set according to the cooling water temperature. Since a friction of the internal combustion engine becomes larger as the cooling water temperature lowers, the rotation fluctuation of the internal combustion engine immediately after the restart completion can be reduced, even if the friction of the internal combustion engine is large, by gently reducing the throttle opening degree during the throttle return control period.

The present invention may also be configured to set the rate of decrease of the throttle opening degree during the throttle return control period according to the dropping rate of rotation of the internal combustion engine during the fuel injection stop period or the rising rate of rotation of the internal combustion engine during the restart control period. Since the rev up of the internal combustion engine at the time of restart becomes larger as the dropping rate of rotation of the internal combustion engine during the fuel injection stop period or the rising rate of rotation of the internal combustion engine during the restart control period becomes sharper, an effect of suppressing excess rev up of the internal combustion engine at the time of restart can be expected by reducing the throttle opening degree during the throttle return control period more rapidly as the dropping rate of rotation of the internal combustion engine during the fuel injection stop period or the rising rate of rotation of the internal combustion engine during the restart control period becomes sharper.

The present invention may be configured to reduce the throttle opening degree during the throttle return control period, for example, every predetermined time or at every predetermined crank angle, or may be configured to reduce the throttle opening degree every ignition during the throttle return control period.

### Brief Description of the Drawings

FIG. 1 is a schematic configuration diagram of a whole engine control system in a first embodiment of the present invention;
FIG. 2 is a time chart for describing an example of idling stop control/restart control of the first embodiment;
FIG. 3 is flowchart showing a processing flow of an idling stop control/restart control program of the first embodiment;
FIG. 4 is a time chart for describing an example of idling stop control/restart control of the second embodiment;
FIG. 5 is flowchart showing a processing flow of an idling stop control/restart control program of the second embodiment;

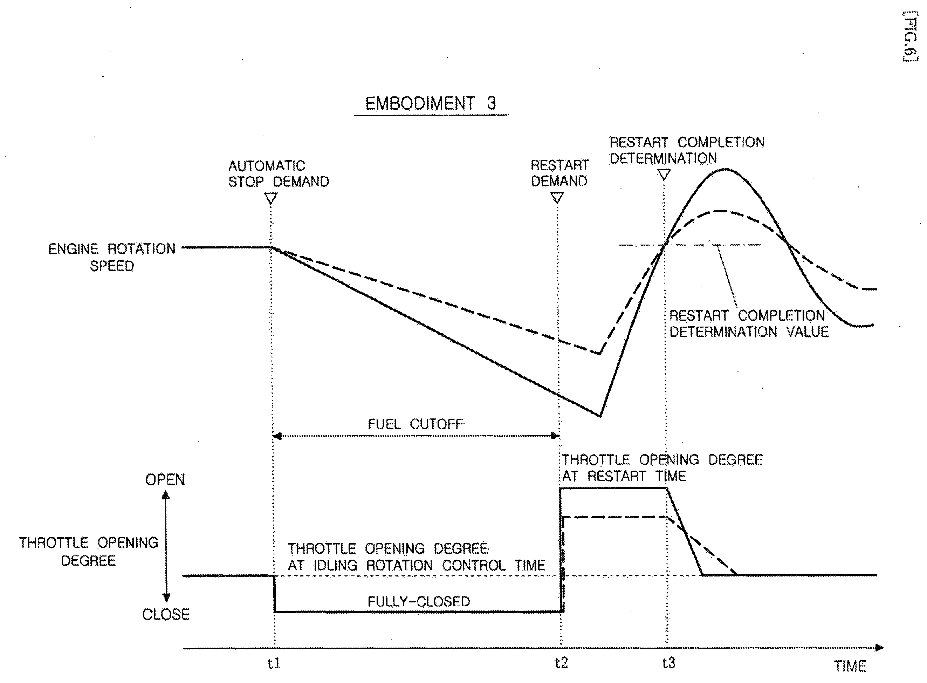

FIG. 6 is a time chart for describing an example of idling stop control/restart control of the third embodiment;
FIG. 7 is flowchart showing a processing flow of an idling stop control/restart control program of the third embodiment; and
FIG. 8 is a flowchart showing a processing flow of a throttle return control program of the third embodiment.

### Best Mode for carrying out the Invention

Three first to third embodiments embodying an aspect for carrying out the present invention will be described below.

### First Embodiment

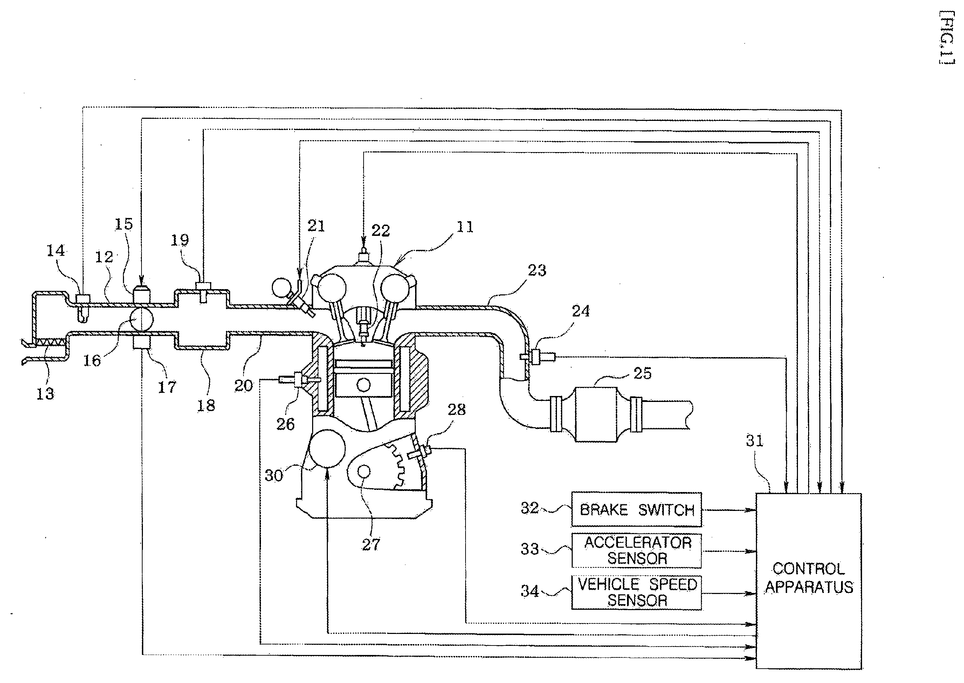

The first embodiment of the present invention will be described with reference to FIGS. 1 to 3.

First, a schematic configuration of a whole engine control system will be described with reference to FIG. 1.

An air cleaner 13 is provided at the most upstream section of an intake pipe 12 of an engine 11 which is an internal combustion engine, and an airflow meter 14 which detects an intake air amount is provided on a downstream side of the air cleaner 13. A throttle valve 16 whose opening degree is adjusted by a motor 15 (throttle drive means) and a throttle opening degree sensor 17 which detects an opening degree of the throttle valve 16 (a throttle opening degree) are provided on a downstream side of the airflow meter 14.

Further, a surge tank 18 is provided on a downstream side of the throttle valve 16, and an intake pipe pressure sensor 19 which detects an intake pipe pressure is provided at the surge tank 18. Further, an intake manifold 20 which introduces air to each cylinder of the engine 11 is connected with the surge tank 18, and a fuel injection valve 21 which injects fuel to an intake port is attached near the intake port of the intake manifold 20 of each cylinder. Further, an ignition plug 22 is attached to a cylinder head of the engine 11 for each cylinder, and air-fuel mixture in the cylinder is ignited by spark discharge of each ignition plug 22.

On the other hand, exhaust gas sensors 24 (an air-fuel ratio sensor, an oxygen sensor, and the like) which detect an air-fuel ratio of exhaust gas, rich/lean, and the like are provided in an exhaust pipe 23 of the engine 11, and a catalyst 25 such as a three-way catalyst which cleans up exhaust gas is provided on the downstream side of the exhaust gas sensors 24.

Further, a cooling water temperature sensor 26 which detects a cooling water temperature is attached to a cylinder block of the engine 11. A crank angle sensor 28 which outputs a pulse signal each time when a crank shaft 27 rotates by a predetermined crank angle is attached to the side of an outer periphery of the crank shaft 27 of the engine 11, so that an engine rotation speed is detected based upon an interval (cycle) of output pulses of the crank angle sensor 28, and detection of a crank angle and cylinder discrimination [discrimination between a cylinder put during an intake stroke (an injecting cylinder) and a cylinder put under a compression stroke (an igniting cylinder)] are performed by counting output pulses of the crank angle sensor 28 based upon output signals of a cam angle sensor (not shown) or a tooth-missing portion of the crank angle sensor 28 (a reference crank angle).

Further, a starter 30 for rotationally driving (cranking) the crank shaft 27 at an ordinary starting time other than a starterless starting time described later is attached to the engine 11. As the starter 30, a starter of a permanently engaged type where a pinion always meshes with a ring gear coupled to the crank shaft 27 of the engine 11 may be used or a starter configured such that a pinion is protruded to mesh with a ring gear only at an ordinary starting time other than a starterless starting time may be used. Further, in a hybrid electric vehicle, a motor for vehicle driving can be used as a starter.

A control apparatus 31 which controls operations of the engine 11 and the starter 30 is composed of one or a plurality of ECUs (for example, an ECU for an engine, an ECU for idling stop). The control apparatus 31 is inputted with signals from various sensors detecting an driving state, for example, not only the above-described airflow meter 14, throttle opening degree sensor 17, intake pipe pressure sensor 19, exhaust gas sensor 24, and cooling water temperature sensor 26 but also a brake switch 32 which detects activation (ON)ldeactivation (OFF) of the brake, an accelerator sensor 33 which detects an accelerator opening degree, a vehicle speed sensor 34 which detects a vehicle speed, and the like.

The control apparatus 31 controls the fuel injection amount of the engine 11, an injection timing thereof, an ignition timing thereof, the intake air amount (throttle opening degree) thereof, and the like during engine operation in response to operation conditions detected by the above-described various sensors. Further, the control apparatus 31 functions as automatic stop control means and automatic start control means described in the claims, and it monitors whether or not an automatic stop demand (an idling stop demand) has been generated during engine operation and stops fuel injection (performs fuel cutoff) to automatically stop combustion in the engine 11 (stop idling) when the automatic stop demand has been generated.

The automatic stop demand may be generated after vehicle stop (during vehicle stopping) but in the first embodiment, the automatic stop demand is also generated even in a deceleration region at a low speed which may result in vehicle stop during vehicle running in order to expand a fuel cutoff region of the idling stop control. Specifically, whether or not the vehicle has reached a certain predetermined deceleration state which may result in vehicle stop during vehicle running (whether or not the automatic stop demand has been generated) is determined based upon the following conditions. For example, (1) whether or not the accelerator is off (the throttle is completely closed), (2) whether or not the brake is ON, and (3) whether or not the vehicle speed is in a low speed region equal to a predetermined vehicle speed or less are determined, and when the state where all of the conditions (1) to (3) are satisfied continues for a predetermined time period or more, the certain predetermined deceleration state which may result in vehicle stop is determined. Incidentally, it goes without saying that a determining method of the certain predetermined deceleration state which may result in vehicle stop may be optionally changed.

At a time point when it has been determined that the vehicle speed is in the certain predetermined deceleration state which may result in vehicle stop during vehicle running, it is determined that the automatic stop demand (idling stop demand) has been generated, so that combustion in the engine 11 is automatically stopped (idling stop is performed) by stopping fuel injection. Thereafter, when a driver has conducted an operation (for example, cancel of a braking operation, an accelerator-pedal stepping operation, operation of the shift lever to the drive range, and the like) for re-accelerating or starting the vehicle during an idling stop period (during engine rotation dropping or after engine rotation stop due to fuel cutoff at an automatic stop time), a restart demand is generated to restart the engine 11. Besides, there is such a case that a restart demand is generated from a battery charging control system or a control system of a vehicle-mounted device such as an air conditioner to restart the engine 11.

By the way, there is a case where a starterless starting is performed in response to a restart demand generated by a braking releasing operation or the like, even without the driver stepping the accelerator pedal, during fuel cutoff/engine rotation dropping of idling stop control, and in such a case, in a conventional system, at the time of restart demand generation, with emphasis on a convergence performance of idling engine rotation after restart completion, a throttle opening degree is controlled by idling rotation speed control (ISC) so as to keep the engine rotation speed at a target idling rotation speed. This limits an intake air amount at the time of restart, which may cause failure in starterless starting due to insufficient combustion torque of the engine.

Therefore, in the first embodiment, a throttle opening degree during a restart control period after restart demand generation is controlled so as to be opened up to a throttle opening degree at a restart time that is larger than that at an idling rotation control time so that an intake air amount during the restart control period is made larger than that at the idling rotation control time. Here, the throttle opening degree at the restart time is preset so as to secure a sufficient intake air amount required for starterless starting.

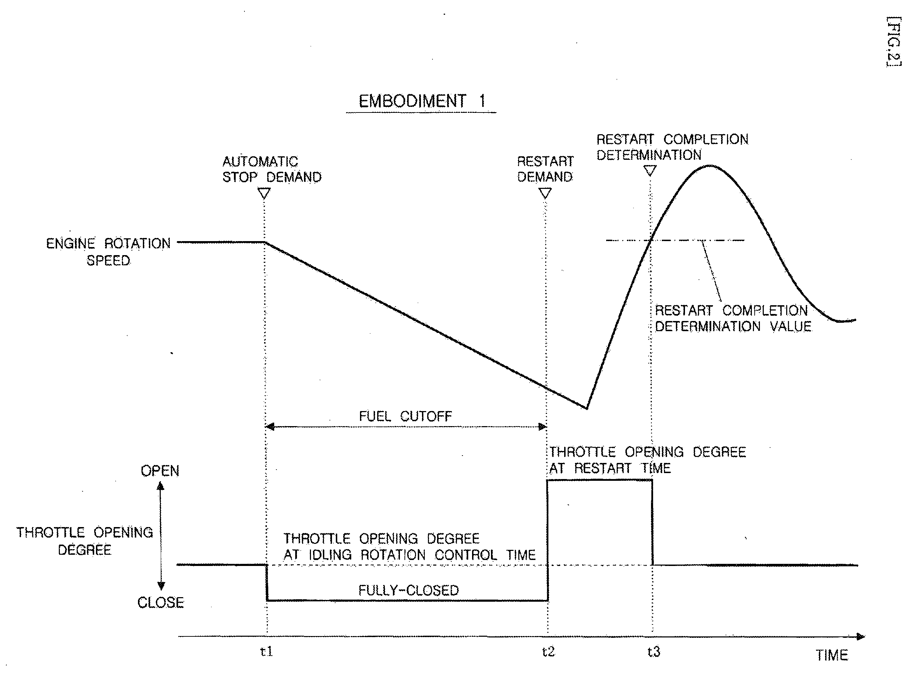

Next, with reference to FIG. 2, an example of idling stop control/restart control of the first embodiment will be described. During engine operation, at a time point t1 when an automatic stop demand has been generated, fuel cutoff is started, and the throttle opening degree is also shifted to a fully-closed position.

Thereafter, if a restart demand is generated during fuel cutoff/engine rotation drop in a rotation speed region where starterless starting is possible (a rotation speed region where an engine rotation speed is higher than a starterless starting determination value), at the time point t2, the throttle opening degree is opened up to a throttle opening degree at a restart time that is larger than that at an idling rotation control time so as to make an intake air amount during the restart control period larger than that at the idling rotation control time and to resume fuel injection, thereby performing the starterless starting that the engine 11 is restarted by only fuel injection without use of the starter 30.

Thus, at a time point t3 when the engine rotation speed has exceeded the restart completion determination value, restart completion is determined, the restart control is terminated, and the throttle opening degree is caused to return to the target throttle opening degree at the ordinary throttle control time. At this time, if the accelerator is fully closed (the driver is not stepping on the accelerator pedal), the throttle opening degree is caused to return to the target throttle opening degree at the idling rotation control time. If the driver is stepping on the accelerator pedal, the throttle opening degree is returned to a target throttle opening degree set according to an amount of stepping of the accelerator pedal (an accelerator opening degree) .

Incidentally, in the first embodiment, the restart control period for which the throttle opening degree is kept at the throttle opening degree at the restart time is set to the period from restart demand generation to restart completion, but it may be set to a period from restart demand generation to elapse of a preset certain period. Here, as the certain period, a period required from restart demand generation to restart completion may be preliminarily estimated and set.

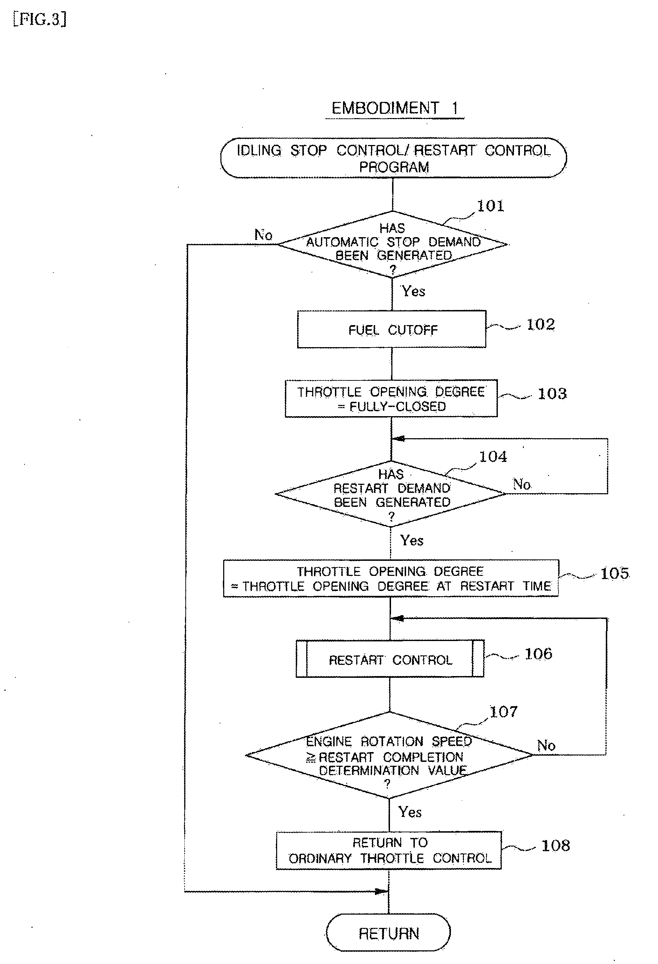

The restart control of the first embodiment described above is performed by the control apparatus 31 according to an idling stop control/restart control program in FIG. 3 in the following manner.

A during-idling-stop restart control program in FIG. 3 is executed repeatedly with a predetermined cycle during a power-on period of the control apparatus 31 (during a period in which an ignition switch is on), and serves as automatic stop control means and automatic start control means described in the claims. When this program is started up, first, whether or not an automatic stop demand has been generated is determined at Step 101, and when an automatic stop demand is not generated, this routine is terminated without executing subsequent processing.

Thereafter, at a time point when the automatic stop demand has been generated, the control proceeds from Step 101 to Step 102, where fuel cutoff is performed to stop combustion of the engine 11. Then, at the next Step 103, the throttle opening degree is switched to a fully-closed position.

At the next Step 104, whether or not a restart demand has been generated is determined, and the control stands by until a restart demand is generated. At this time, during fuel cutoff, the throttle opening degree is kept (fixed) at the fully-closed position until a restart demand is generated.

Thereafter, at a time point when a restart demand has been generated, the control proceeds from Step 104 to Step 105, where the throttle opening degree is opened to a throttle opening degree at a restart time that is larger than that at an idling rotation control time so that an intake air amount during a restart control period is made larger than that at the idling rotation control time.

Thereafter, the control proceeds to Step 106, where restart control is performed so that fuel injection is restarted to restart the engine 11. At this time, when an engine rotation speed at the time of restart demand generation is in a rotation speed range where starterless starting is possible (restart can be performed by only fuel injection), starterless starting that the engine 11 is restarted by only fuel injection without use of the starter 30 is performed.

Then, at the next Step 107, whether or not the engine rotation speed has exceeded the restart completion determination value is determined, and the restart control is continued until the engine rotation speed exceeds the restart completion determination value. Thereafter, at a time point when the engine rotation speed has exceeded the restart completion determination value, restart completion is determined and the restart control is terminated, the control proceeds to Step 108, and the throttle opening degree is caused to return to a target throttle opening degree at the time of the ordinary throttle control. At this time, when the accelerator is fully closed (the driver is not stepping on the accelerator pedal), the throttle opening degree is caused to return to a target throttle opening degree at the time of idling rotation control.

According to the first embodiment described above, since the throttle opening degree is opened to the throttle opening degree at the restart time that is larger than that at the idling rotation control time, at a time point when a restart demand has been generated during fuel cutoff/engine rotation drop of idling stop control, combustion torque of the engine 11 during the restart control period can be increased by making an intake air amount during a restart control period larger than that at the idling rotation control time, and therefore restartability can be improved.

### Second Embodiment

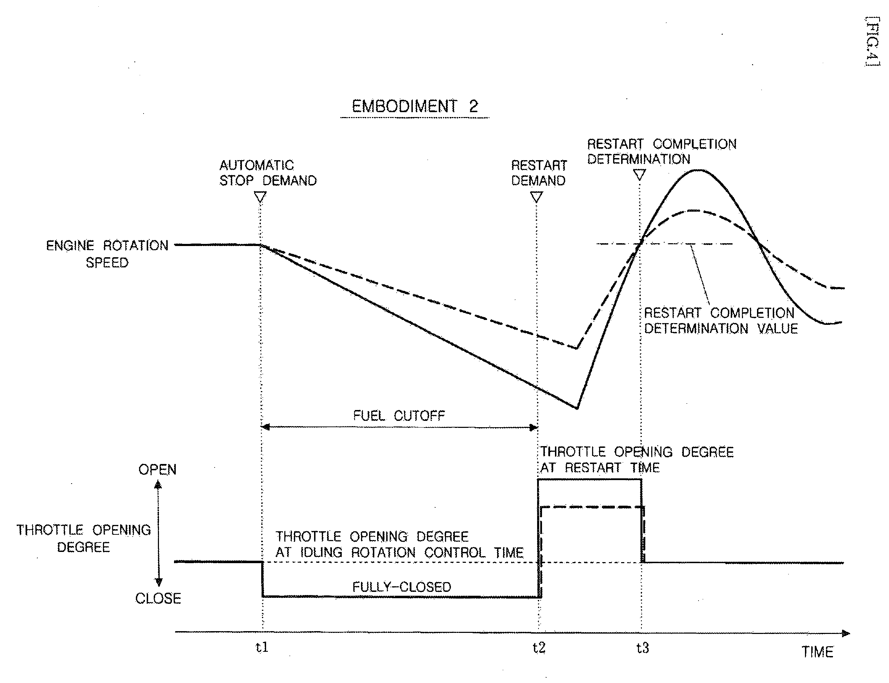

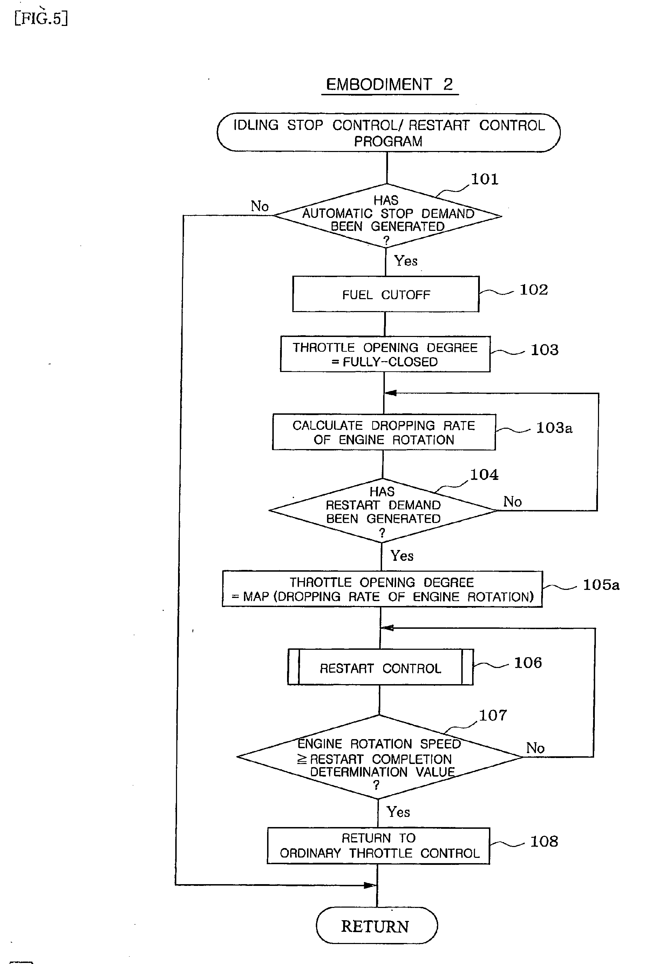

In the above first embodiment, the throttle opening degree during the restart control period is set at a preset constant value (fixed value), but in the second embodiment of the present invention shown in FIGS. 4 and 5, the throttle opening degree during a restart control period is set by a map, a mathematical expression, or the like according to the dropping rate of engine rotation (a dropping amount of engine rotation speed per predetermine time) during a fuel-cutoff period of idling stop control. In this case, also, the throttle opening degree during the restart control period is set at a throttle opening degree larger than that at the idling rotation control time.

As the dropping rate of engine rotation drop during a fuel-cutoff period becomes sharper even if the engine rotation speed at the time of restart demand generation is the same, inertial energy toward rotation drop of the engine 11 at the time of restart demand generation becomes larger, and accordingly combustion torque of the engine 11 required for starterless starting becomes larger. Therefore, such a configuration is adopted that the combustion torque of the engine 11 is increased by increasing the throttle opening degree during the restart control period to increase the intake air amount in response to sharpness of the dropping rate of engine rotation during a fuel-cutoff period.

The restart control of the second embodiment described above is performed according to an idling stop control/restart control program in FIG. 5 by the control apparatus 31. The idling stop control/restart control program in FIG. 5 has the same processes of steps as the idling stop control/restart control program in FIG. 3 described in the first embodiment, except that the process of Step 103a is added next to Step 103 and the process of Step 103a is repeated until a restart demand is generated, and that the process of Step 105 is replaced with the process of Step 105a.

In the idling stop control/restart control program in FIG. 5, after an automatic stop demand has been generated, fuel cutoff is performed and the throttle opening degree is switched to a fully-closed position, and the process of Step 103a is also repeated until a restart demand is generated during a fuel-cutoff period so that the dropping rate of engine rotation during the fuel cutoff period (a dropping amount of the engine rotation speed per predetermine time) is calculated.

Thereafter, at a time point when a restart demand has been generated, the control proceeds from Step 104 to Step 105a, where a throttle opening degree during a restart control period corresponding to the dropping rate of engine rotation during the fuel cutoff period is calculated with use of a map, a mathematical expression, or the like for calculating a throttle opening degree during a restart control period using the dropping rate of engine rotation during a fuel cutoff period as a parameter. Thus, the throttle opening degree during a restart control period is set so as to increase as the dropping rate of engine rotation during the fuel cutoff period becomes sharper.

Thereafter, the restart control is performed according to the same procedure as in the first embodiment, and at a time point when the engine rotation speed has exceeded the restart completion determination value, restart completion is determined and the restart control is terminated, and the throttle opening degree is caused to return to a target throttle opening degree at an ordinary throttle control time (Steps 106 to 108).

According to the second embodiment described above, since the throttle opening degree during a restart control period is increased so as to increase the intake air amount as the dropping rate of engine rotation during a fuel cutoff period becomes sharper, the combustion torque of the engine 11 during the restart control period can be increased as the dropping rate of engine rotation during a fuel cutoff period becomes sharper, so that restartability can be improved.

Incidentally, the present invention may be configured to set the throttle opening degree during a restart control period according to at least one of an engine rotation speed, a cooling water temperature, an intake pipe pressure, or an intake air amount at the time of restart demand generation. For example, since inertial energy toward rotation drop of the engine 11 becomes larger as the speed of engine rotation at the time of restart demand generation becomes lower, and accordingly combustion torque of the engine 11 required for starterless starting becomes larger, the throttle opening degree during a restart control period may be increased so as to increase the combustion torque of the engine 11 as the speed of engine rotation at a time of restart demand generation decreases.

Since friction of the engine 11 increases as the cooling water temperature at the time of restart demand generation becomes lower, and accordingly the combustion torque required for starterless starting becomes larger, the throttle opening degree during a restart control period may be increased so as to increase the combustion torque of the engine 11 as the cooling water temperature at the time of restart demand generation becomes lower.

Further, since the intake pipe pressure or the intake air amount varies corresponding to the speed of engine rotation at the time of restart demand generation, an effect similar to that obtained by setting the throttle opening degree during a restart control period according to the speed of engine rotation at the time of restart demand generation can be obtained by setting the throttle opening degree during a restart control period according to the intake pipe pressure or the intake air amount at the time of restart demand generation.

### Third Embodiment

In the first and second embodiments, the throttle opening degree is quickly reduced to the target throttle opening degree at the ordinary throttle control time after the restart control period elapses, but in a third embodiment of the present invention shown in FIGS . 6 to 8, throttle return control that reduces the throttle opening degree gradually to return to the ordinary throttle control is performed after the restart control period elapses. This reduces the intake air amount gently when the control returns from the restart control to the ordinary throttle control, so that rotation fluctuation of the engine 11 immediately after restart completion can be reduced.

Further, in the third embodiment, the rate of decrease of the throttle opening degree during a period of the throttle return control is set according to the dropping rate of engine rotation during the fuel injection stop period or the rising rate of engine rotation during the restart control period. The sharper the dropping rate of engine rotation during the fuel injection stop period or the rising rate of engine rotation during the restart control period, the larger the rev up of the engine 11 at the time of restart, so that the throttle opening degree during the throttle return control period is decreased more rapidly as the dropping rate of engine rotation during the fuel injection stop period or the rising rate of engine rotation during the restart control period becomes sharper. This can expect an effect of suppressing excess rev up of the engine 11 at the time of restart.

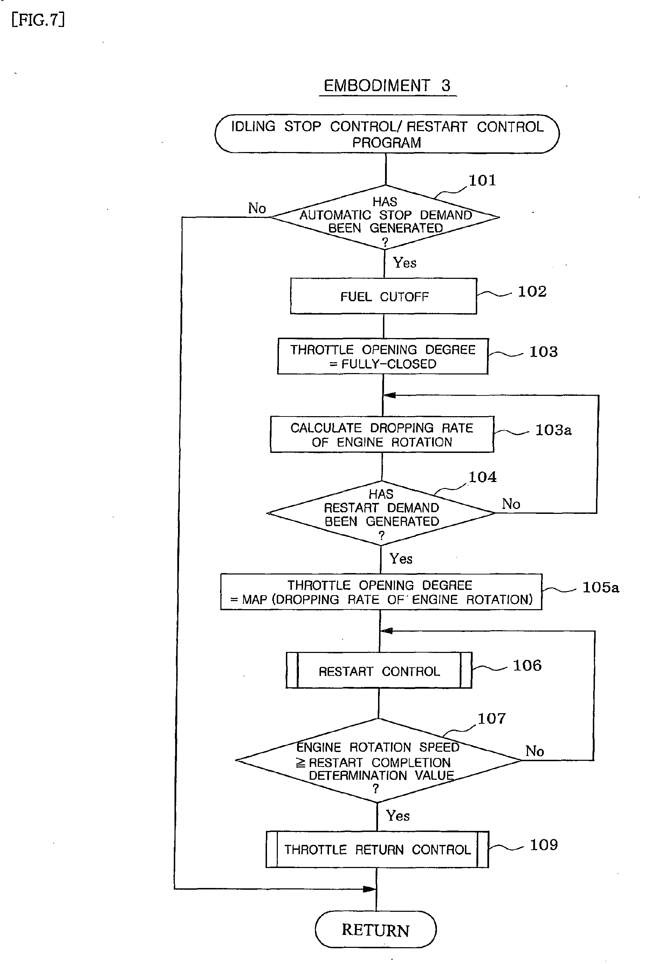

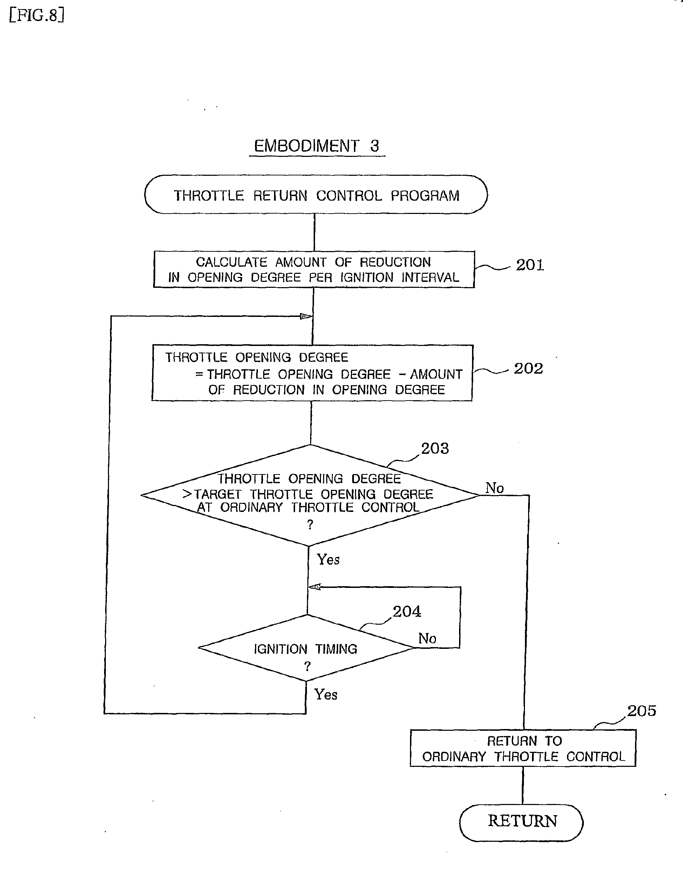

An idling stop control/restart control program in FIG. 7 that is executed in the third embodiment has the same processes of steps as the idling stop control/restart control program in FIG. 5 described in the second embodiment, except that Step 108 is replaced with Step 109 and the throttle return control program in FIG. 8 is executed at the Step 109.

In the idling stop control/restart control program in FIG. 7, at a time point when it is determined at Step 107 that the engine rotation speed has exceeded the restart completion determination value due to restart control, the restart control is terminated, and the control proceeds to Step 109, where the throttle return control program in FIG. 8 is executed. In the throttle return control program in FIG. 8, first, as Step 201, an amount of reduction in opening degree per ignition interval is calculated based upon the dropping rate of engine rotation during the fuel cutoff period (the dropping amount of engine rotation speed per predetermined time) or the rising rate of engine rotation during the restart control period (the rising amount of engine rotation speed per predetermined time). The opening degree reduced amount per ignition interval is set so as to become larger as the dropping rate of engine rotation during the fuel injection stop period or the rising rate of engine rotation during the restart control period becomes sharper, so that the throttle opening degree during the throttle return control period is decreased rapidly.

Thereafter, the control proceeds to Step 202, where a new throttle opening degree is obtained by subtracting the amount of reduction in opening degree per ignition interval from a current throttle opening degree. Thereafter, the control proceeds to Step 203, where it is determined whether or not the throttle opening degree subtracted is larger than a target throttle opening degree at the time of ordinary throttle control, and when the throttle opening degree is larger than the target throttle opening degree at the time of ordinary throttle control, it is determined that throttle return control is in progress, and the control proceeds to Step 204 and stands by until an ignition timing comes. Thereafter, when the ignition timing has come, the control returns to Step 202, where a new throttle opening degree is obtained by subtracting the amount of reduction in opening degree per ignition interval from a current throttle opening degree.

Thereafter, by repeating the processes of these Steps 202 to 204, the process that the throttle opening degree is reduced by the amount of reduction in opening degree is repeated every ignition timing. Thereafter, when it is determined at Step 203 that the throttle opening degree has reached the target throttle opening degree at the time of ordinary throttle control, the throttle return control is terminated and the control proceeds to Step 205, where the control returns to the ordinary throttle control.

In the third embodiment described above, since the throttle return control that reduces the throttle opening degree gradually to return to the ordinary throttle control is performed after the restart control period has elapsed, rotation fluctuation of the engine 11 immediately after restart completion can be reduced by reducing the intake air amount gently when the control returns from the restart control to the ordinary throttle control.

Incidentally, the rate of decrease in throttle opening degree (the amount of reduction in opening degree) during the throttle return control period may be set according to the cooling water temperature. As the cooling water temperature becomes lower, the friction of the engine 11 becomes higher, and therefore by reducing the throttle opening degree during the throttle return control period more gently as the cooling water temperature becomes lower, rotation fluctuation of the engine 11 immediately after restart completion can be reduced even if the friction of the engine 11 is large.

Further, in the third embodiment, the throttle opening degree is reduced every ignition during the throttle return control period, but it may be reduced every predetermined time or every predetermined crank angle.

Further, in the respective first to third embodiments, the throttle opening degree is switched to a fully-closed position during a fuel cutoff period after automatic stop demand generation, but the throttle opening degree may be slightly opened during the fuel cutoff period after the automatic stop demand generation so that the intake air amount is preliminarily increased slightly in preparation for generation of a restart demand. This reduces the effect of response delay of an air system when the throttle opening degree is switched to a restart-time throttle opening degree at the time of restart demand generation, so that restart can be performed with immediate change of an in-cylinder filled air amount to an air amount suitable for restart at the time of restart demand generation, and therefore the combustion torque of the engine 11 at the time of restart can be effectively increased.

Incidentally, an internal combustion engine to which the present invention can be applied is not limited to the engine of an intake port injection type as shown in FIG. 1, and it can also be implemented by being applied to an engine of an in-cylinder injection type, or an engine of a dual injection type that uses intake port injection and in-cylinder injection in combination.

Besides, the present invention can also be implemented by being applied to a hybrid electric vehicle using an internal combustion engine (engine) and a motor in combination as power sources, and it can be implemented by being variously modified without departing from the scope of the claims.

### Description of Reference Numerals

11···engine (internal combustion engine), 12···intake pipe, 15···motor (throttle drive means), 16···throttle valve, 21···fuel injection valve, 22···ignition plug, 23···exhaust pipe, 30···starter, 31···control apparatus (automatic stop control means, automatic start control means), 32···brake switch, 33···accelerator sensor, 34···vehicle speed sensor.

## Claims

1. An automatic stop and start control apparatus of an internal combustion engine provided with throttle drive means for adjusting a throttle opening degree of the internal combustion engine and automatic stop control means for stopping fuel injection when an automatic stop demand has been generated during operation of the internal combustion engine, the automatic stop and start control apparatus comprising:
automatic start control means for performing restart control to restart the internal combustion engine by resuming fuel injection when a restart demand has been generated in the course of rotation speed drop of the internal combustion engine during a fuel injection stop period after generation of the automatic stop demand,
wherein
the automatic start control means controls the throttle drive means to make the throttle opening degree during a restart control period after generation of the restart demand larger than that at an idling rotation control time, and sets the throttle opening degree during a period of the restart control according to a dropping rate of rotation of the internal combustion engine during the fuel injection stop period.

2. The automatic stop and start control apparatus of an internal combustion engine according to claim 1, wherein the automatic start control means sets the throttle opening degree during the restart control period according to at least one of an internal combustion engine rotation speed, a cooling water temperature, an intake pipe pressure, and an intake air amount at the time of the restart demand generation.

3. The automatic stop and start control apparatus of an internal combustion engine according to claim 1 or 2, wherein the automatic start control means performs throttle return control to reduce the throttle opening degree gradually after the restart control period elapses to return to ordinary throttle control.

4. The automatic stop and start control apparatus of an internal combustion engine according to claim 3, wherein the automatic start control means sets the rate of decrease of the throttle opening degree during a period of the throttle return control according to the cooling water temperature.

5. The automatic stop and start control apparatus of an internal combustion engine according to claim 3, wherein the automatic start control means sets the rate of decrease of the throttle opening degree during a period of the throttle return control according to the dropping rate of rotation of the internal combustion engine during the fuel injection stop period or the rising rate of rotation of the internal combustion engine during the restart control period.

6. The automatic stop and start control apparatus of an internal combustion engine according to claim 3, wherein the automatic start control means reduces the throttle opening degree every ignition during a period of the throttle return control.

7. The automatic stop and start control apparatus of an internal combustion engine according to claim 1, wherein the restart control period is a period from generation of the restart demand to restart completion.

## Patentansprüche

1. Automatische Start-/Stopp-Steuervorrichtung einer Verbrennungskraftmaschine, die mit einem Drosselantriebsmittel ausgestattet ist, um einen Drosselöffnungsgrad der Verbrennungskraftmaschine einzustellen, und mit einem automatischen Stoppsteuermittel, um die Kraftstoffeinspritzung zu stoppen, wenn eine automatische Stoppanforderung während des Betriebs der Verbrennungskraftmaschine erzeugt wurde, wobei die automatische Start-/Stopp-Steuervorrichtung aufweist:
ein automatisches Startsteuermittel zur Durchführung der Neustartsteuerung, um die Verbrennungskraftmaschine neu zu starten, indem die Kraftstoffeinspritzung wiederaufgenommen wird, wenn eine Neustartanforderung während eines Drehzahlabfalls der Verbrennungskraftmaschine in einem Kraftstoffeinspritzungs-Stoppzeitraum nach Erzeugung der automatischen Stoppanforderung erzeugt wurde, wobei
das automatische Startsteuermittel den Drosselantrieb steuert, um den Drosselöffnungsgrad während eines Neustart-Steuerzeitraums nach Erzeugung der Neustartanforderung größer als bei einer Leerlaufrotationssteuerzeit einzustellen, und den Drosselöffnungsgrad während eines Zeitraums der Neustartsteuerung gemäß einer Abfallrate der Rotation der Verbrennungskraftmaschine während des Kraftstoffeinspritzungs-Stoppzeitraums einstellt.

2. Automatische Start-/Stopp-Steuervorrichtung einer Verbrennungskraftmaschine nach Anspruch 1, wobei das automatische Startsteuermittel den Drosselöffnungsgrad während des Zeitraums der Neustartsteuerung gemäß zumindest einem einer Verbrennungskraftmaschinendrehzahl, einer Kühlwassertemperatur, eines Ansaugrohrdrucks und/oder einer Luftansaugmasse zu dem Zeitpunkt der Erzeugung der Neustartanforderung einstellt.

3. Automatische Start-/Stopp-Steuervorrichtung einer Verbrennungskraftmaschine nach Anspruch 1 oder 2, wobei das automatische Startsteuermittel eine Drosselrückkehrsteuerung durchführt, um den Drosselöffnungsgrad, nachdem der Zeitraum der Neustartsteuerung abgelaufen ist, graduell zu verringern, um zur gewöhnlichen Drosselsteuerung zurückzukehren.

4. Automatische Start-/Stopp-Steuervorrichtung einer Verbrennungskraftmaschine nach Anspruch 3, wobei das automatische Startsteuermittel die Verringerungsrate des Drosselöffnungsgrads während eines Zeitraums der Drosselrückkehrsteuerung gemäß der Kühlwassertemperatur einstellt.

5. Automatische Start-/Stopp-Steuervorrichtung einer Verbrennungskraftmaschine nach Anspruch 3, wobei das automatische Startsteuermittel die Verringerungsrate des Drosselöffnungsgrads während eines Zeitraums der Drosselrückkehrsteuerung gemäß der Abfallrate der Rotation der Verbrennungskraftmaschine während des Zeitraums des Kraftstoffeinspritzungsstopps oder gemäß der Anstiegrate der Rotation der Verbrennungskraftmaschine während des Zeitraums der Neustartsteuerung einstellt.

6. Automatische Start-/Stopp-Steuervorrichtung einer Verbrennungskraftmaschine nach Anspruch 3, wobei das automatische Startsteuermittel den Drosselöffnungsgrad bei jedem Zündvorgang während einer Zeitspanne der Drosselrückkehrsteuerung verringert.

7. Automatische Start-/Stopp-Steuervorrichtung einer Verbrennungskraftmaschine nach Anspruch 1, wobei der Zeitraum der Neustartsteuerung ein Zeitraum ab der Erzeugung der Neustartanforderung bis zur Neustart-Beendigung ist.

## Revendications

1. Équipement de commande d'arrêt et de démarrage automatiques d'un moteur à combustion interne pourvue d'un moyen d'attaque de papillon des gaz destiné à ajuster le degré d'ouverture de papillon des gaz du moteur à combustion interne et d'un moyen de commande d'arrêt automatique destiné à arrêter l'injection de carburant lorsqu'une demande d'arrêt automatique a été engendrée durant le fonctionnement du moteur à combustion interne, l'équipement de commande d'arrêt et de démarrage automatiques comprenant :
un moyen de commande de démarrage automatique destiné à effectuer une commande de redémarrage pour redémarrer le moteur à combustion interne en reprenant l'injection de carburant lorsqu'une demande de redémarrage a été engendrée au cours d'une chute de vitesse de rotation du moteur à combustion interne durant une période d'arrêt d'injection de carburant après production de la demande d'arrêt automatique,
dans lequel le moyen de commande de démarrage automatique commande le moyen d'attaque de papillon des gaz pour faire que le degré d'ouverture de papillon des gaz pendant une période de commande de redémarrage après production de la demande de redémarrage soit plus grand que celui au moment d'une commande de rotation au ralenti, et règle le degré d'ouverture de papillon des gaz durant une période de la commande de redémarrage en fonction de la vitesse de chute de la rotation du moteur à combustion interne durant la période d'arrêt d'injection de carburant.

2. Équipement de commande d'arrêt et de démarrage automatiques d'un moteur à combustion selon la revendication 1, dans lequel le moyen de commande de démarrage automatique règle le degré d'ouverture de papillon des gaz durant la période de commande de redémarrage en fonction d'au moins l'une de la vitesse de rotation de moteur à combustion interne, de la température d'eau de refroidissement, de la pression de tubulure d'admission et de la quantité d'air d'admission au moment de la production d'une demande de redémarrage.

3. Équipement de commande d'arrêt et de démarrage automatiques d'un moteur à combustion selon la revendication 1 ou 2, dans lequel le moyen de commande de démarrage automatique effectue une commande de retour de papillon des gaz pour réduire le degré d'ouverture de papillon des gaz graduellement après que la période de commande de redémarrage s'est écoulée pour revenir à une commande ordinaire de papillon des gaz.

4. Équipement de commande d'arrêt et de démarrage automatiques d'un moteur à combustion selon la revendication 3, dans lequel le moyen de commande de démarrage automatique règle la vitesse de diminution du degré d'ouverture de papillon des gaz durant une période de commande de retour de papillon des gaz en fonction de la température d'eau de refroidissement.

5. Équipement de commande d'arrêt et de démarrage automatiques d'un moteur à combustion selon la revendication 3, dans lequel le moyen de commande de démarrage automatique règle la vitesse de diminution du degré d'ouverture de papillon des gaz durant une période de commande de retour de papillon des gaz en fonction de la chute de vitesse de rotation du moteur à combustion interne durant la période d'arrêt d'injection de carburant ou de la montée de vitesse de rotation du moteur à combustion interne durant la période de commande de redémarrage.

6. Équipement de commande d'arrêt et de démarrage automatiques d'un moteur à combustion selon la revendication 3, dans lequel le moyen de commande de démarrage automatique réduit le degré d'ouverture de papillon des gaz à chaque allumage durant la période de la commande de retour de papillon des gaz.

7. Équipement de commande d'arrêt et de démarrage automatiques d'un moteur à combustion selon la revendication 1, dans lequel la période de commande de redémarrage est une période allant de la production de la demande de redémarrage à l'achèvement du redémarrage.
